# EUROPEAN PATENT APPLICATION

(11) **EP 4 717 991 A1**
(43) Date of publication of application: **01.04.2026**
(21) Application number: 25159073.3
(22) Date of filing: 20.02.2025
(51) Int. Cl.: F24F 11/89

(54) **ELECTRICAL BOX, SHUTOFF VALVE UNIT, AND AIR-CONDITIONER**

(30) Priority: 30.09.2024 JP 2024170361
(71) Applicant: Hitachi-Johnson Controls Air Conditioning, Inc., Tokyo 105-0022 (JP)
(72) Inventor: KITAMURA, Hiromu, Tokyo 105-0022 (JP)
(74) Representative: MERH-IP Matias Erny Reichl Hoffmann Patentanwälte PartG mbB

(57) **Abstract**

Provided is an electrical box that includes: a housing with an opening; a cover that covers the opening; a control board disposed in the housing; and a battery unit having a capacitor, in which the capacitor is connected to the control board through a wire, and the control board is disposed at a location other than a location between the battery unit and the cover.

## Description

### BACKGROUND

### 1. Technical Field

The present disclosure relates to an electrical box, a shutoff valve unit, and an air-conditioner.

### 2. Related Art

Nowadays, there has been an air-conditioner using flammable refrigerant in order to improve air-conditioning performance and environmental performance. In a case where there is a concern about detection of refrigerant leakage from a refrigeration cycle in the air-conditioner, stop of the refrigerant leakage by a safety device even when power is shut off due to, e.g., power outage is a requirement of a room air-conditioner performance standard.

The safety device includes a battery unit. The safety device closes a shutoff valve with power supplied from the battery unit to the shutoff valve when detected the power shutoff. This prevents a great amount of refrigerant from leaking during power outage.

As the safety device, there has been known a backup power supply structure using a capacitor as described in JP-A-2022-176373.

### SUMMARY

An electrical box according to a present embodiment includes: a housing with an opening; a cover that covers the opening; a control board disposed in the housing; and a battery unit having a capacitor, in which the capacitor is connected to the control board through a wire. Further, the control board is disposed at a location other than a location between the battery unit and the cover, or the battery unit is disposed at a location closer to the cover than the control board.

### BRIEF DESCRIPTION OF DRAWINGS

Fig. 1A is a perspective view of a power shutoff valve unit according to the present embodiment as viewed diagonally from the upper front;
Fig. 1B is a perspective view of an indoor unit forming an air-conditioner according to the present embodiment as viewed from below a ceiling;
Fig. 2 is a block conceptual diagram of the indoor unit, an outdoor unit, and the power shutoff valve unit forming the air-conditioner according to the present embodiment;
Fig. 3 is an exploded perspective view showing a maintenance cover detached from the power shutoff valve unit;
Fig. 4 is a perspective view showing an opened battery unit of the power shutoff valve unit;
Fig. 5 is a perspective view of the power shutoff valve unit after the maintenance cover has been detached;
Fig. 6 is an exploded view showing a bearing component detached from an electrical box;
Fig. 7A is a perspective view of the bearing component as viewed from the front;
Fig. 7B is an enlarged view of a portion I of Fig. 7A; and
Fig. 8 is a top view showing a state when a worker accesses, for maintenance, the battery unit through an inspection port of the ceiling.

### DETAILED DESCRIPTION

In the following detailed description, for purpose of explanation, numerous specific details are set forth in order to provide a thorough understanding of the disclosed embodiments. It will be apparent, however, that one or more embodiments may be practiced without these specific details. In other instances, well-known structures and devices are schematically shown in order to simplify the drawing.

A capacitor forming a battery unit lowers in performance due to a temperature or repeated charge. For this reason, the battery unit needs to be inspected or replaced. However, there is a relationship of C∝S/d between the capacitance C of the capacitor, the area S of an electrode plate (conductor), and a gap d from the electrode plate (conductor). Thus, in order to ensure a great capacitance C, a great area S of the electrode plate is necessary. For this reason, a battery unit including a plurality of capacitors is large and heavy. Thus, the battery unit is firmly, i.e., securely and robustly, fixed to an electrical box. This causes a problem that it is difficult to perform inspection. Moreover, a problem that replaceability is lowered is also caused.

The present embodiment copes with the above-described problems. That is, the present embodiment is intended to provide an electrical box, a shutoff valve unit, and an air-conditioner for which inspection and replacement are facilitated.

In order to solve the problem described above, an electrical box according to the present disclosure includes: a housing with an opening; a cover that covers the opening; a control board disposed in the housing; and a battery unit having a capacitor, in which the capacitor is connected to the control board through a wire, and the control board is disposed at a location other than a location between the battery unit and the cover.

According to the present embodiment, the electrical box, the shutoff valve unit, and the air-conditioner can be provided, for which inspection and replacement are facilitated.

Hereinafter, the present embodiment will be described in detail with reference to the drawings.

### (Overall Configuration)

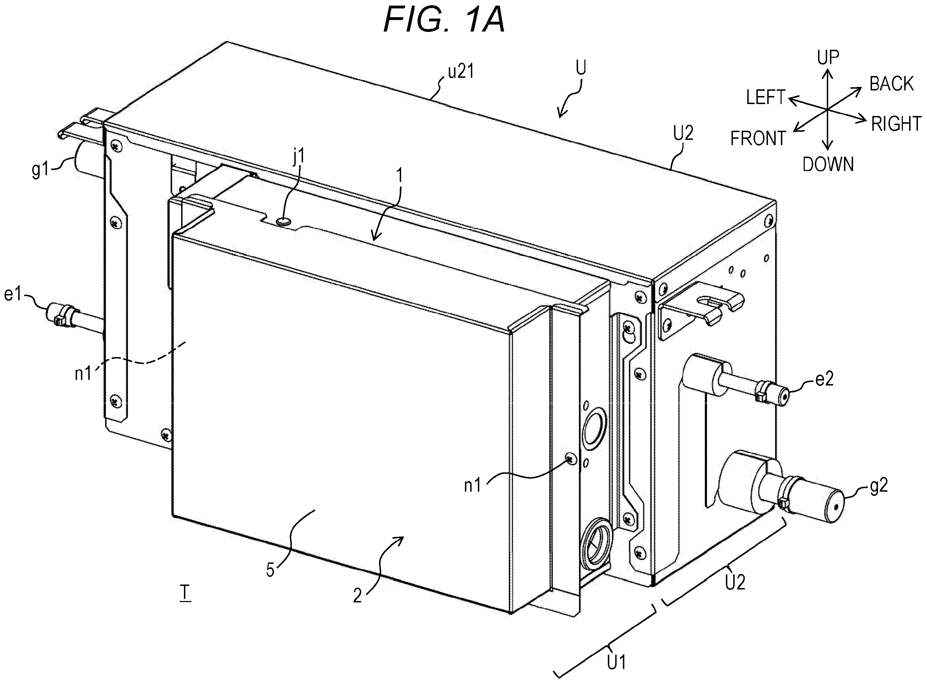

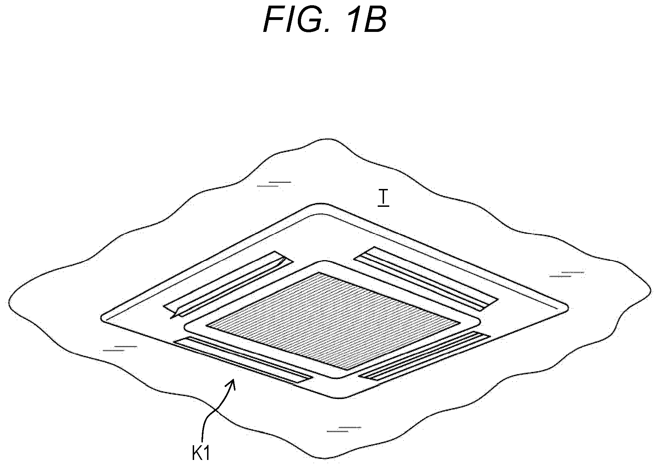

Fig. 1A is a perspective view of a power shutoff valve unit U according to the present embodiment as viewed diagonally from the upper front. Fig. 1B is a perspective view of an indoor unit K1 forming an air-conditioner K according to the present embodiment as viewed from below a ceiling T.

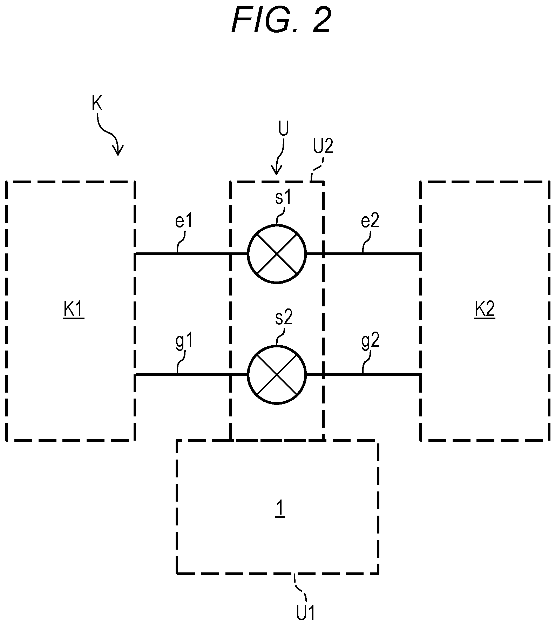

Fig. 2 is a block conceptual diagram of the indoor unit K1, an outdoor unit K2, and the power shutoff valve unit U forming the air-conditioner K according to the present embodiment.

The air-conditioner K includes the indoor unit K1 that performs cooling and/or heating and the outdoor unit K2.

The present embodiment will be described with reference to the exemplary air-conditioner K including the power shutoff valve unit U (see Fig. 1A) between the indoor unit K1 and the outdoor unit K2 as shown in Fig. 2.

The power shutoff valve unit U of the embodiment is connected to the indoor unit K1 through a refrigerant liquid pipe e1 and a refrigerant gas pipe g1. In addition, the power shutoff valve unit U is connected to the outdoor unit K2 through a refrigerant liquid pipe e2 and a refrigerant gas pipe g2.

As shown in Fig. 2, in the power shutoff valve unit U, a refrigerant liquid shutoff valve s1 is provided between the refrigerant liquid pipe e1 and the refrigerant liquid pipe e2. Moreover, a refrigerant gas shutoff valve s2 is provided between the refrigerant gas pipe g1 and the refrigerant gas pipe g2.

The power shutoff valve unit U shown in Fig. 1 has an electrical box unit U1 and a shutoff valve arrangement unit U2.

In a case of emergency such as power outage, power is supplied from the electrical box unit U1 to the refrigerant liquid shutoff valve s1 and refrigerant gas shutoff valve s2 of the shutoff valve arrangement unit U2.

Accordingly, the refrigerant liquid shutoff valve s1 is closed. Then, refrigerant liquid no longer flows between the refrigerant liquid pipe e1 and the refrigerant liquid pipe e2. Moreover, the refrigerant gas shutoff valve s2 is closed. Then, refrigerant gas no longer flows between the refrigerant gas pipe g1 and the refrigerant gas pipe g2. As a result, the flow of refrigerant between the indoor unit K1 and the outdoor unit K2 is stopped.

### (Electrical Box Unit U1)

In the power shutoff valve unit U shown in Fig. 1A, the electrical box unit U1 is disposed on an outer plate surface of a housing u21 of the shutoff valve arrangement unit U2.

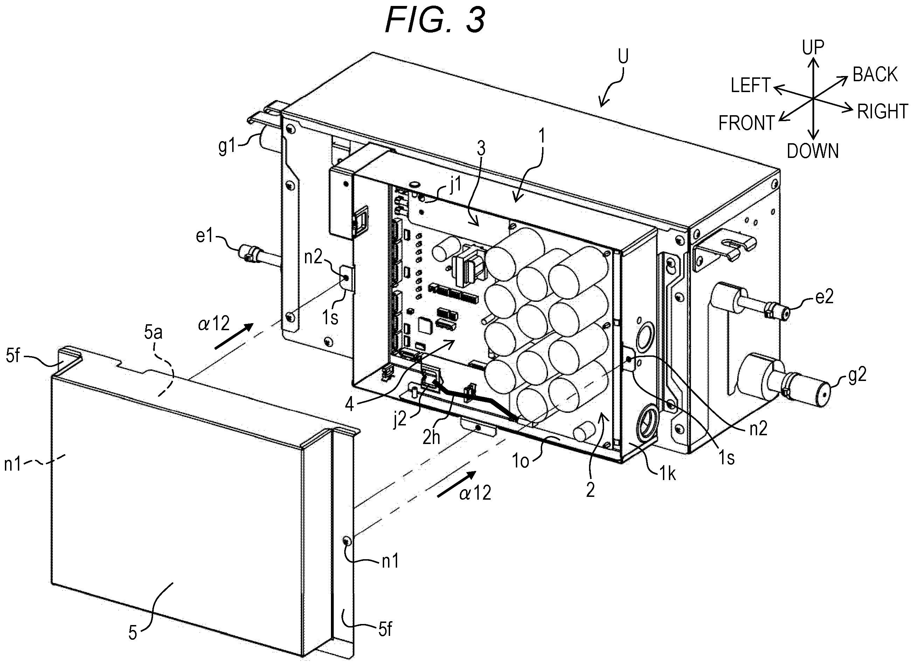

Fig. 3 is an exploded perspective view showing a maintenance cover 5 detached from the power shutoff valve unit U.

A battery unit 2 is housed in an electrical box 1 of the electrical box unit U1.

Specifically, the battery unit 2 is mounted on a bearing component 3. The bearing component 3 is pivotably supported by an upper support shaft j1 (see Fig. 3) and a lower support shaft j2 placed in the electrical box 1.

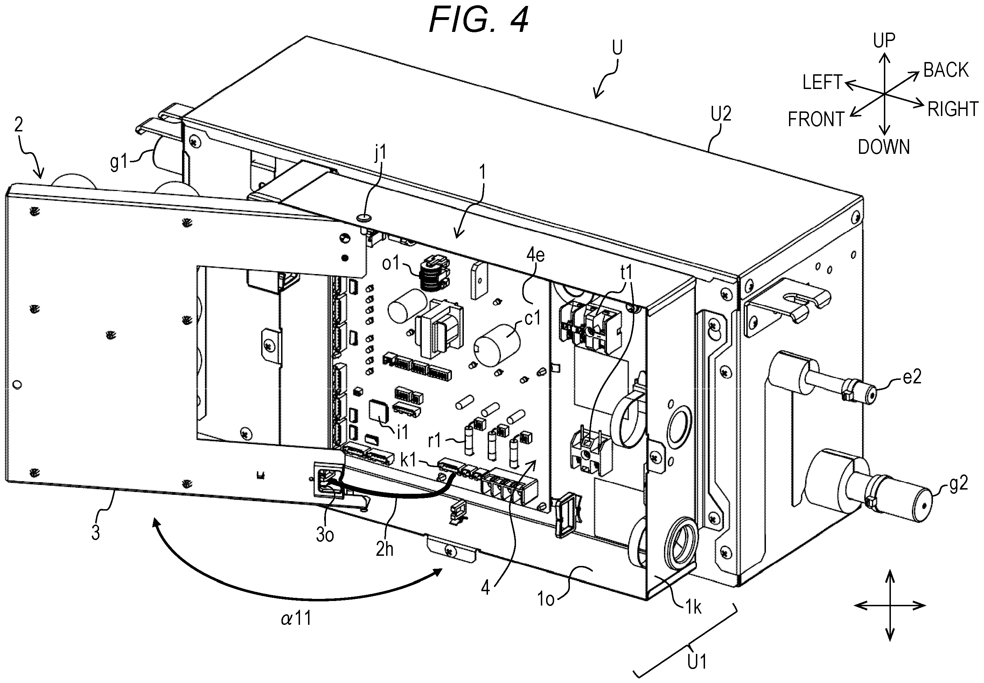

Fig. 4 is a perspective view showing the opened battery unit 2 of the power shutoff valve unit U.

As indicated by an arrow α11 in Fig. 4, the battery unit 2 has a structure openable and closable by turning (rotation) with the upper support shaft j1 and lower support shaft j2 of the electrical box 1 as support points.

### (Electrical Box 1 and Control Board 4)

As shown in Fig. 4, a control board 4 is provided in the electrical box 1 disposed on the far side of the battery unit 2.

The control board 4 is a control board for performing control of opening and closing the refrigerant liquid shutoff valve s1 and the refrigerant gas shutoff valve s2 upon power distribution and power outage.

For example, during operation of the air-conditioner K (see Fig. 2), the refrigerant liquid shutoff valve s1 and the refrigerant gas shutoff valve s2 are opened.

On the other hand, upon power outage, the refrigerant liquid shutoff valve s1 and the refrigerant gas shutoff valve s2 are closed by power supplied to the refrigerant liquid shutoff valve s1 and the refrigerant gas shutoff valve s2 by discharge of a capacitor Ca of the battery unit 2. By closing the refrigerant liquid shutoff valve s1 and the refrigerant gas shutoff valve s2, the flow of refrigerant between the indoor unit K1 and the outdoor unit K2 is shut off. This can prevent refrigerant from flowing between the indoor unit K1 and outdoor unit K2 of the air-conditioner K (see Fig. 2). In this manner, the safety of the air-conditioner K (see Fig. 2) can be enhanced.

A wiring pattern (not shown) of a good conductor such as copper alloy or aluminum alloy is formed by etching on an insulating epoxy resin board 4e of the control board 4. Various electronic components, electric components, and terminal mounts t1 (see Fig. 4) forming an RLC circuit, such as a connector k1, an IC chip i1, a capacitor c1, a resistor r1, and a choke coil o1, are mounted on the wiring pattern on the epoxy resin board 4e.

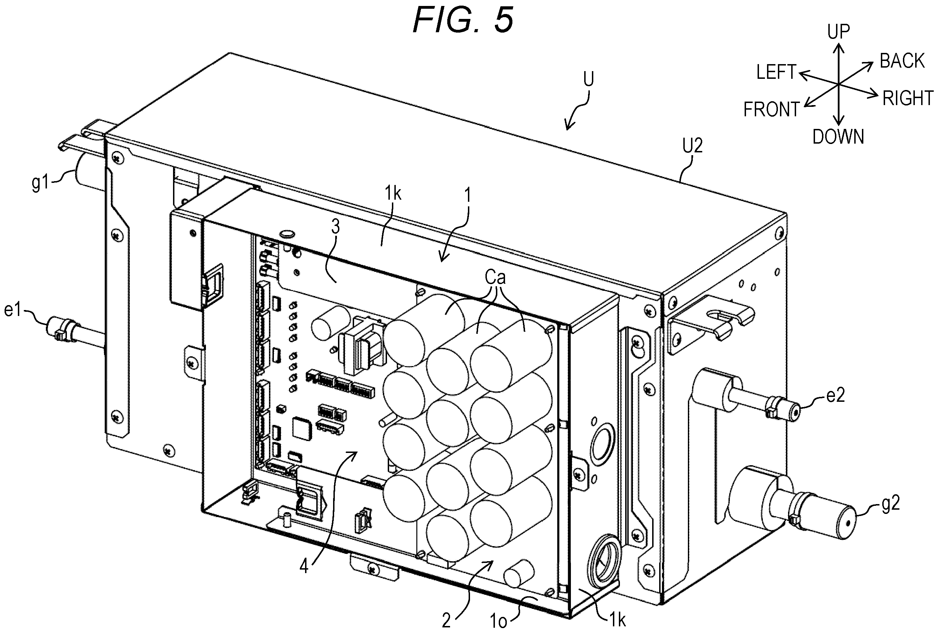

Fig. 5 is a perspective view of the power shutoff valve unit U after the maintenance cover 5 has been detached.

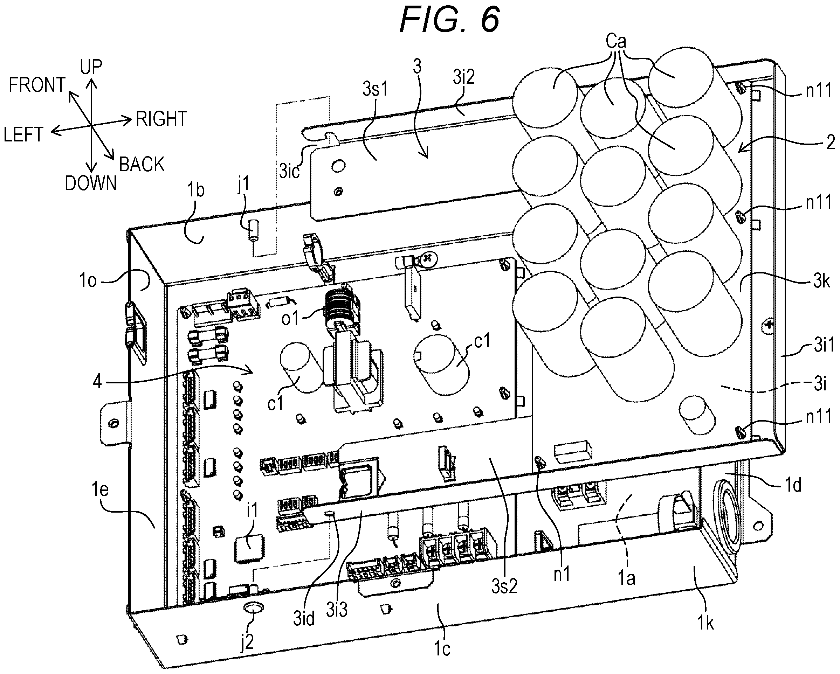

Fig. 6 is an exploded view showing the bearing component 3 detached from the electrical box 1.

As shown in Fig. 6, the electrical box 1 includes a housing 1k having a bottom plate 1a, an upper plate 1b, a lower plate 1c, a right plate 1d, and a left plate 1e. An outer shell of the electrical box 1 is in a box shape having an opening 1o at the front.

The electrical box 1 is formed of, for example, a stainless steel sheet (SUS), a hot-dip galvanized steel sheet (SGCC), or an electrolytic zinc-coated steel sheet (SECC) in order to electromagnetically shield the battery unit 2 and the control board 4 placed in the electrical box 1.

The upper support shaft j1 protruding downward to pivotably support the battery unit 2 is formed in the upper plate 1b of the electrical box 1. Moreover, the lower support shaft j2 protruding upward to pivotably support the battery unit 2 is formed in the lower plate 1c of the electrical box 1.

The upper support shaft j1 is, for example, a pin made of stainless steel (e.g., SUS304). The upper support shaft j1 is fixed after having been press-fitted in the upper plate 1b of the electrical box 1 from above. Similarly, the lower support shaft j2 is, for example, a pin made of stainless steel. The lower support shaft j2 is fixed after having been press-fitted in the lower plate 1c of the electrical box 1 from below.

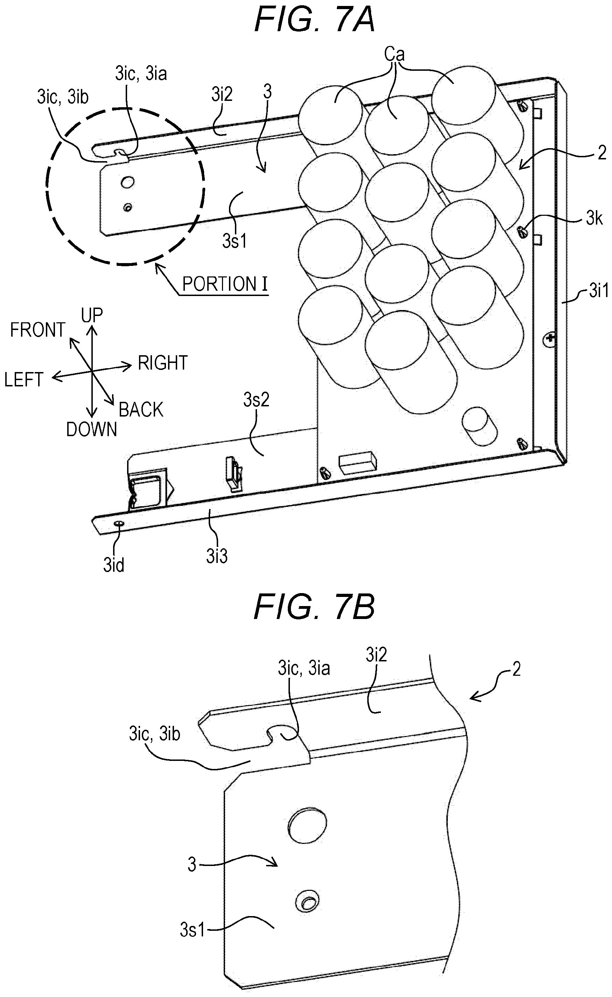

The battery unit 2 shown in Fig. 1A is placed on the bearing component 3 (see Figs. 7A and 6). The bearing component 3 (see Fig. 7A) is pivotably supported by the upper support shaft j1 and lower support shaft j2 of the electrical box 1. With this configuration, the battery unit 2 is freely openable and closable in the electrical box 1 by turning (rotation) of the bearing component 3, as shown in Figs. 4 and 1A.

### (Maintenance Cover 5)

As shown in Fig. 3, the front opening 1o of the electrical box 1 housing the battery unit 2 is closed with the maintenance cover 5.

The maintenance cover 5 has a lid shape extending in a right-left direction and an up-down direction to cover the front opening 1o of the outer shell of the electrical box 1. The maintenance cover 5 has, on the far side thereof, an opening 5a facing the opening 1o of the electrical box 1.

The maintenance cover 5 is formed of, for example, a stainless steel sheet (SUS), a hot-dip galvanized steel sheet (SGCC), or an electrolytic zinc-coated steel sheet (SECC) in order to electromagnetically shield the battery unit 2 and the control board 4 in the electrical box 1.

With this configuration, the maintenance cover 5 serves as a spatial and electromagnetic lid for the electrical box 1 housing the battery unit 2 and the control board 4, as shown in Figs. 3 and 1A.

As shown in Fig. 3, the maintenance cover 5 is formed with a pair of rectangular fixing flanges 5f. One of the rectangular flanges 5f extends leftward of the maintenance cover 5. The other rectangular flange 5f extends rightward of the maintenance cover 5. A fixing raised countersunk head screw n1 is attached to the center of each rectangular flange 5f.

On the other hand, the electrical box 1 shown in Fig. 3 is formed with a pair of fixing pieces 1s for fixing the maintenance cover 5. One of the fixing pieces 1s is bent leftward from a left end portion of the electrical box 1. The other fixing piece 1s is bent rightward from a right end portion of the electrical box 1. The center of each fixing piece 1s is cut to form an internal thread n2 by burring.

As indicated by arrows α12 in Fig. 3, the raised countersunk head screws n1 are screwed into the internal threads n2 of the fixing pieces 1s of the electrical box 1 such that the electrical box 1 is covered with the maintenance cover 5. In this manner, the maintenance cover 5 is fixed to the electrical box 1 (see Fig. 1A).

Upon maintenance for the battery unit 2 or the control board 4 in the electrical box 1 shown in Fig. 1A, a worker p detaches the pair of raised countersunk head screws n1 from the internal threads n2 of the fixing pieces 1s of the electrical box 1, as shown in Fig. 3. Accordingly, the maintenance cover 5 is detached. In this manner, maintenance for the battery unit 2 or the control board 4 is performed.

That is, the battery unit 2 is disposed on the near side with respect to the control board 4. In other words, the control board 4 is disposed at a location other than a location between the battery unit 2 and the maintenance cover 5. Thus, the maintenance cover 5 is detached upon inspection of the battery unit 2, and therefore, maintenance for the battery unit 2 can be facilitated. Note that among the components in the electrical box, the battery unit 2 is most frequently inspected or replaced.

In other words, the battery unit 2 is disposed at a location closer to the maintenance cover 5 than the control board 4 is, or is disposed between the control board 4 and the maintenance cover 5. With this configuration, an access to the battery unit 2 and the control board 4 can be made in descending order of frequency of access.

### (Bearing Component 3)

The bearing component 3 shown in Fig. 6 is formed with a mount plate 3i, an upper support plate 3s1, and a lower support plate 3s2. The upper support plate 3s1 and the lower support plate 3s2 extend leftward of the mount plate 3i on both sides of the mount plate 3i. A power supply board 3k is fixed onto the mount plate 3i of the bearing component 3 with a machine screw n11. A plurality of capacitors Ca is mounted as batteries on the power supply board 3k. That is, the mount plate 3i of the bearing component 3 is equipped with the battery unit 2 having the power supply board 3k. Moreover, the plurality of capacitors Ca is mounted on the power supply board 3k.

Fig. 7A is a perspective view of the bearing component 3 as viewed from the front. Fig. 7B is an enlarged view of a portion I of Fig. 7A.

A right cut and raised portion 3i1, an upper cut and raised portion 3i2, and a lower cut and raised portion 3i3 are formed at the periphery of the bearing component 3 for the purpose of strength improvement (flexural rigidity (EI) improvement). The right cut and raised portion 3i1 is formed by cutting and raising a right end portion of the mount plate 3i forward. The upper cut and raised portion 3i2 is formed by cutting and raising an upper end portion of the mount plate 3i and the upper support plate 3s1 forward. The lower cut and raised portion 3i3 is formed by cutting and raising a lower end portion of the mount plate 3i and the lower support plate 3s2 forward.

As shown in Fig. 7B, the upper cut and raised portion 3i2 of the bearing component 3 is formed with a shaft insertion cutout 3ic. The shaft insertion cutout 3ic has a round hole 3ia and a long hole 3ib. The long hole 3ib has a smaller opening dimension than the diameter of the round hole 3ia.

A shaft insertion hole 3id (see Fig. 7A) is provided so as to penetrate the lower cut and raised portion 3i3 of the bearing component 3.

As indicated by a dashed line in Fig. 6, the lower support shaft j2 of the electrical box 1 is fitted in the shaft insertion hole 3id of the bearing component 3. In addition, the upper support shaft j1 of the electrical box 1 is fitted in the shaft insertion cutout 3ic of the bearing component 3.

In this manner, as shown in Fig. 4, the battery unit 2 mounted on the bearing component 3 is pivotably supported by the upper support shaft j1 and lower support shaft j2 of the electrical box 1.

With this configuration, the bearing component 3 on which the battery unit 2 is placed turns about the upper support shaft j1 and lower support shaft j2 of the electrical box 1. In this manner, the battery unit 2 is openable and closable as shown in Figs. 4 and 1A.

The upper shaft insertion cutout 3ic (see Fig. 7B) of the bearing component 3 is in a slit shape. Thus, the lower support shaft j2 and the upper support shaft j1 of the electrical box 1 can be easily detached from the shaft insertion hole 3id and shaft insertion cutout 3ic of the bearing component 3. In addition, the lower support shaft j2 and upper support shaft j1 of the electrical box 1 can be easily attached to the shaft insertion hole 3id and shaft insertion cutout 3ic of the bearing component 3. That is, the bearing component 3 can be easily detached from and attached to the electrical box 1.

### (Features and Effects)

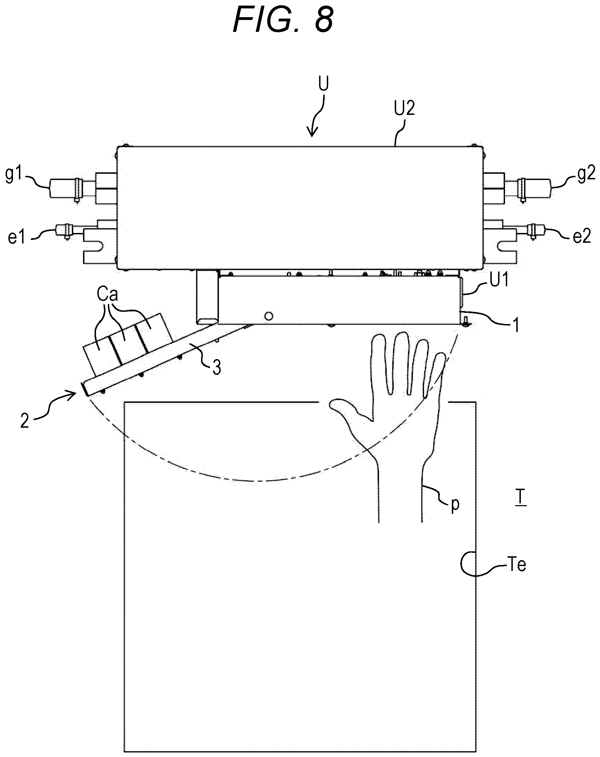

Fig. 8 is a top view showing a state when the worker p accesses, for maintenance, the battery unit 2 through an inspection port Te of the ceiling T.

The worker p first loosens, through the inspection port Te, the raised countersunk head screws n1 screwed into the internal threads n2 of the electrical box 1 and detaches the maintenance cover 5 of the power shutoff valve unit U shown in Fig. 1A from the electrical box 1 (see Fig. 5).

In this state, the worker p can inspect and replace the battery unit 2 including the plurality of capacitors Ca.

Subsequently, as indicated by the arrow α11 in Fig. 4, the worker p rotates the bearing component 3 equipped with the battery unit 2 with the upper support shaft j1 and lower support shaft j2 of the electrical box 1 as the support points. In this manner, the battery unit 2 is pulled out forward of the electrical box 1. As a result, as shown in Fig. 4, the control board 4 on which the terminal mounts t1 and the like are mounted is exposed to the outside.

In this manner, the battery unit 2 is pulled out of the electrical box 1 as shown in Fig. 8, so that the worker p can work through the inspection port Te. In this state, the battery unit 2 can also be fixed at a location at which the battery unit 2 does not interfere with inspection through the inspection port Te. Thus, the worker p can easily access, with one's hands, the battery unit 2 or the control board 4 in the electrical box 1

(the worker p can work with touching these components with one's hands). As described above, the worker p can access the components in the electrical box in descending order of frequency of access.

A wire 2h of the battery unit 2 can pass through a hole 3o (see Fig. 4) in the vicinity of the shaft support point. Thus, an extra length of the wire 2h is not necessary. As a result, the battery unit 2 is openable and closable with the wire 2h connected to the connector k1 (see Fig. 4) of the control board 4.

Then, the worker p can detach the wire 2h from the connector k1 (see Fig. 4) of the control board 4, and can detach the battery unit 2 fixed to the bearing component 3 from the upper support shaft j1 and lower support shaft j2 of the electrical box 1 as shown in Fig. 6. Thus, the battery unit 2 can be easily replaced.

In addition, when a contractor who installs the air-conditioner K shown in Fig. 2 connects the wire 2h, as illustrated in Fig. 6, the contractor can pull the battery unit 2 out of the electrical box 1 with the upper support shaft j1 and lower support shaft j2 of the electrical box 1 as the support points. Thus, the contractor can easily access the control board 4 on which the terminal mounts t1 are mounted. As a result, the work on the wire 2h can be performed without lowering workability.

The battery unit 2 can be pulled out through the inspection port Te (see Fig. 8) to the detachment location of the battery unit 2. Thus, the workability is not lowered.

The battery unit 2 including the plurality of capacitors Ca is large and heavy in order to ensure a great capacitance. For this reason, the battery unit 2 is normally firmly fixed. This lowers the replaceability of the battery unit.

Thus, in the present embodiment, the battery unit 2 can be detached together with the bearing component 3 (see Fig. 7A) to which the battery unit 2 is firmly fixed, as shown in Fig. 6. Thus, the battery unit 2 can be easily replaced.

As shown in Fig. 1, the electrical box 1 can be disposed outside the housing u21 of the shutoff valve arrangement unit U2 including the shutoff valves (s1, s2). Thus, an access to the electrical box 1 can be easily made.

As described above, the battery unit 2 is provided in front of the control board 4. Thus, the battery unit 2 is not blocked by the control board 4. Consequently, the battery unit 2 can be easily inspected or replaced (see Fig. 6) after the maintenance cover 5 has been detached from the power shutoff valve unit U shown in Fig. 1A (see

Fig. 3). Moreover, an access to the control board 4 (see Fig. 4) can be easily made.

In the air-conditioner K including the power shutoff valve unit U, the flow of refrigerant between the indoor unit K1 and the outdoor unit K2 can be blocked upon power outage.

Thus, according to the present embodiment, the electrical box 1, the power shutoff valve unit U, and the air-conditioner K having favorable inspectability and replaceability can be provided.

### Other Embodiments

1. Unlike the above-described embodiment, the power shutoff valve unit U may be disposed at a location other than the location between the indoor unit K1 and the outdoor unit K2, such as in the indoor unit K1 or in the outdoor unit K2. The arrangement location of the power shutoff valve unit U may be selected as necessary.

2. Any of the electrical box 1 and the power shutoff valve unit U may be applied to various devices other than the air-conditioner K, needless to say.

3. In the present embodiment, the capacitor Ca that stores and releases charge forms the battery unit 2. Note that a battery (storage battery) operable in principle totally different from that of the capacitor Ca may form the battery unit 2. As in the capacitor Ca, the performance of the storage battery is also lowered due to a temperature or repeated charge.

4. The configuration of the present embodiment is not limited to the configuration of the embodiment above. Various specific modifications can be made to the embodiment above within the technical scope of the claims of the present disclosure.

The foregoing detailed description has been presented for the purposes of illustration and description. Many modifications and variations are possible in light of the above teaching. It is not intended to be exhaustive or to limit the subject matter described herein to the precise form disclosed. Although the subject matter has been described in language specific to structural features and/or methodological acts, it is to be understood that the subject matter defined in the appended claims is not necessarily limited to the specific features or acts described above. Rather, the specific features and acts described above are disclosed as example forms of implementing the claims appended hereto.

## Claims

1. An electrical box comprising:
a housing with an opening;
a cover that covers the opening;
a control board disposed in the housing; and
a battery unit having a capacitor,
wherein the capacitor is connected to the control board through a wire, and
the control board is disposed at a location other than a location between the battery unit and the cover, or
the battery unit is disposed at a location closer to the cover than the control board.

2. The electrical box according to claim 1, wherein
the battery unit is disposed between the control board and the cover.

3. The electrical box according to claim 1 or 2, wherein
the wire is connected to the control board and the capacitor through a connector.

4. The electrical box according to at least one of claims 1 to 3, wherein
the battery unit is rotatably disposed with a shaft provided for the electrical box as a support point.

5. The electrical box according to at least one of claims 1 to 4, wherein
the battery unit is attachable to the electrical box and detachable from the electrical box.

6. A shutoff valve unit comprising:
the electrical box according to at least one of claims 1 to 5; and
a shutoff valve that blocks a flow of refrigerant.

7. An air-conditioner comprising:
the shutoff valve unit according to claim 6.

8. The air-conditioner according to claim 7, wherein
the shutoff valve unit is provided in a middle of a refrigerant pipe.
